(19) **Europäisches Patentamt**
**European Patent Office**
**Office européen des brevets**

(11) **EP 4 693 179 A1**

(12) **EUROPÄISCHE PATENTANMELDUNG**

(43) Veröffentlichungstag:
**11.02.2026 Patentblatt 2026/07**

(21) Anmeldenummer: **24193316.7**

(22) Anmeldetag: **07.08.2024**

(51) Internationale Patentklassifikation (IPC):
**G06T 7/11** (2017.01) **G06T 7/194** (2017.01)

(52) Gemeinsame Patentklassifikation (CPC):
**G06T 7/11; G06T 7/194;** G06T 2207/10004;
G06T 2207/10028; G06T 2207/30252

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH MA MD TN**

(71) Anmelder: **dSPACE GmbH**
**33102 Paderborn (DE)**

(72) Erfinder:
• **Both, Fabian**
**76137 Karlsruhe (DE)**
• **Hanselmann, Harald**
**76227 Karlsruhe (DE)**
• **Marrakchi, Yassine**
**76227 Karlsruhe (DE)**
• **Darwin, Oscar**
**76227 Karlsruhe (DE)**
• **Weber, Michael**
**76227 Karlsruhe (DE)**
• **Romanski, Simon**
**76131 Karlsruhe (DE)**

(54) **VERFAHREN ZUM ERMITTELN EINES DREIDIMENSIONALEN HÜLLKÖRPERS**

(57)     Die Erfindung betrifft ein computerimplementiertes Verfahren zum Ermitteln eines dreidimensionalen Hüllkörpers (16), bevorzugt eines Quaders, für ein auf ersten Daten (12) dargestelltes Objekt, wobei die ersten Daten (12) wenigstens drei Raumdimensionen umfassen, wobei dabei Informationsdaten eines zweidimensionalen minimal umgebenden Polygons, für das auf zweiten Daten dargestellte Objekt, empfangen werden, eine Projektionsmatrix, welche eine Abbildung eines dreidimensionalen Datenpunktes (14) der ersten Daten (12) auf einen zweidimensionalen Datenpunkt in den zweiten Daten definiert empfangen wird, und wobei der dreidimensionale Hüllkörper (16) des Objektes mittels eines mathematischen Optimierungsverfahrens und einer Zielfunktion ($Z_1$, $Z_2$, $Z_3$) ermittelt wird, wobei die Zielfunktion weniger als 100000 Terme ($T_1$, $T_2$, $T_3$, $T_1'$, $T_2'$, $T_1''$, $T_2''$) umfasst.

Zudem betrifft die Erfindung eine Vorrichtung zur Datenverarbeitung umfassend Mittel zur Ausführung des obigen Verfahrens sowie ein Computerprogrammprodukt, umfassend Befehle, die bei der Ausführung des Programms durch einen Computer diesen veranlassen, das obige Verfahren auszuführen.

Weiterhin betrifft die Erfindung einen computerlesbaren Datenträger, auf dem das obige Computerprogrammprodukt gespeichert ist.

Fig. 1

**Beschreibung**

Die Erfindung betrifft ein computerimplementiertes Verfahren zum Ermitteln eines dreidimensionalen Hüllkörpers.

Zudem betrifft die Erfindung eine Vorrichtung zur Datenverarbeitung umfassend Mittel zur Ausführung des obigen Verfahrens.

Weiterhin betrifft die Erfindung ein Computerprogrammprodukt, umfassend Befehle, die bei der Ausführung des Programms durch einen Computer diesen veranlassen, das obige Verfahren auszuführen.

Ferner betrifft die Erfindung einen computerlesbaren Datenträger, auf dem das obige Computerprogrammprodukt gespeichert ist.

Autonomes und Teilautonomes Fahren hat das Potenzial die Mobilität zu verändern und beispielsweise Reisezeiten, Energieverbrauch und/oder Emissionen zu reduzieren. Als wichtige Komponente für autonomes Fahren hat die 3D-Objekterkennung große Aufmerksamkeit erhalten, und Ansätze zur 3D-Objekterkennung, die auf maschinellem Lernen basieren haben in den letzten Jahren an Popularität gewonnen.

Bestehende Ansätze zur 3D-Objekterkennung lassen sich im Prinzip in zwei Gruppen einteilen, je nachdem, ob es sich bei den Ausgangsdaten um zweidimensionale Bilddaten handelt oder um dreidimensionale Punktwolken, die in der Regel durch LiDAR-Sensoren generiert werden. Bei Verfahren, die auf durch Kameras erfassten Bilddaten basieren, stellt das Schätzen des 3D-Hüllkörpers für ein Objekt aus zweidimensionalen Bilddaten eine große Herausforderung dar. Aufgrund der rasanten Entwicklung im Bereich des maschinellen Lernens und insbesondere bei Deep-Learning-Technologien, hat die bildbasierte 3D-Erkennung allerdings bemerkenswerte Fortschritte erzielt.

Ein Nachteil an der bildbasierte 3D-Erkennung mittels maschinellen Lernens ist allerdings, dass ein statistischer Algorithmus wie beispielsweise ein künstliches neuronales Netz mit sehr vielen Lerndaten trainiert werden muss, was aufwändig ist. Während des Trainings lernt der Lernalgorithmus aufgrund der Charakteristika der Lerndaten eine Funktion, die das gewünschte Verhalten zeigt. Die derart erlernte Funktion ist allerdings eine Blackbox, da der Bezug einzelner Terme der erlernten Funktion zu einzelnen Charakteristika der Bilddaten nicht bekannt ist. Im Prinzip wird mit der erlernten Funktion zwar das Verhalten in Form einer Gleichung beschrieben, ohne dabei aber die Komplexität des Problems zu berücksichtigen. Entsprechend eignen sich solche Black-Box Modelle auch nicht für einen weitergehenden Wissensgewinn.

In anderen Worten ist für einen Nutzer also unklar auf welche Weise dynamische und nicht linear programmierte Systeme, wie künstliche neuronale Netze, Deep-Learning-Systeme und/oder genetische Algorithmen, zu ihren Ergebnissen kommen. Dieser Aspekt von Black-Box-Systemen ist insbesondere im Bereich der (teil-)autonomen Fahrzeuge problematisch, da durch die dort immer intensivere Anwendung von KI-Systemen die "Rechenschaftspflicht" (englisch: *accountability*) mehr und mehr auf die Software und deren Ergebnisse verlagert wird. Beispielsweise werden im Bereich des Schadenersatzrechtes Ausgangspunkte für die Notwendigkeit von Interpretierbarkeit beim Einsatz von KI diskutiert.

Verbesserungen bei 3D-Objekterkennung sind auch notwendig in Zusammenhang mit Algorithmen, wie neuronalen Netzwerken, die im Rahmen des überwachten Lernens mit großen Datensätzen vor ihrem Einsatz trainiert werden müssen. Die zum Trainieren verwendeten Daten sind beim überwachten Lernen annotiert, sprich es handelt sich um Daten, bei denen das Ergebnis einer vom Algorithmus zu lernenden Klassifikation schon vorweggenommen ist. In anderen Worten weisen die annotierten Daten beispielsweise schon eine Bounding-Box um ein 3D-Objekt auf und/oder weisen ein Label dahingehend auf, dass es sich bei dem 3D-Objekt um ein Fahrzeug handelt. Die Bereitstellung solcher annotierten Daten ist bisher mit großem und teils manuellem Aufwand verbunden, was sehr zeit- und kostenintensiv ist.

Davon ausgehend ist es die Aufgabe der Erfindung, auf eine einfache, schnelle, und/oder kostengünstige Weise eine 3D-Objekterkennung zu ermöglichen.

Diese Aufgabe wird durch den Gegenstand der Hauptansprüche gelöst. Bevorzugte Weiterbildungen finden sich in den Unteransprüchen.

Erfindungsgemäß wird also ein computerimplementiertes Verfahren zum Ermitteln eines dreidimensionalen Hüllkörpers, bevorzugt eines Quaders, für ein auf ersten Daten dargestelltes Objekt, bereitgestellt, wobei die ersten Daten wenigstens drei Raumdimensionen umfassen, mit den Schritten

- Empfangen von Informationsdaten eines zweidimensionalen minimal umgebenden Polygons, bevorzugt eines zweidimensionalen minimal umgebenden Rechteckes, für das auf zweiten Daten dargestellte Objekt, wobei die zweiten Daten wenigstens zwei Raumdimensionen umfassen, wobei die empfangenen Informationsdaten eine Größe und eine Position des minimal umgebenden Polygons des Objektes in den zweiten Daten definieren,
- Empfangen einer Projektionsmatrix, wobei die Projektionsmatrix eine Abbildung eines dreidimensionalen Datenpunktes der ersten Daten auf einen zweidimensionalen Datenpunkt in den zweiten Daten definiert,
- Ermitteln des dreidimensionalen Hüllkörpers des Objektes mittels eines mathematischen Optimierungsverfahrens und einer Zielfunktion, wobei die Zielfunktion weniger als 100000 Terme umfasst, umfassend

- Initiieren von Informationsdaten des dreidimensionalen Hüllkörpers des Objektes, wobei die Informationsdaten eine Größe, eine Position und eine Orientierung des Hüllkörpers des Objektes in den ersten Daten definieren,
- Generieren von Informationsdaten eines weiteren zweidimensionalen minimal umgebenden Polygons durch projizieren des initiierten Hüllkörpers mittels der empfangenen Projektionsmatrix, und
- Vergleichen der generierten Informationsdaten mit den empfangenen Informationsdaten.

Das erfindungsgemäße Verfahren ist in anderen Worten also ein mathematisches Optimierungsverfahren, mittels dessen der dreidimensionalen Hüllkörper, bevorzugt der Quader, auf Grundlage des zweidimensionalen minimal umgebenden Polygons, bevorzugt dem Rechteck, ermittelt wird. Bei einem mathematischen Optimierungsverfahren handelt es sich um eine Minimierung oder Maximierung der Zielfunktion. Dabei werden die Schritte Initiieren, Generieren und Vergleichen bevorzugt mehrfach durchgeführt, bis ein Abbruchkriterium erreicht ist. Die Zielfunktion weist vorliegend weniger als 100000 Terme, weiter bevorzugt weniger als 10000 Terme, noch weiter bevorzugt weniger als 1000 Terme, und besonders bevorzugt weniger als 100 Terme auf.

Im Gegensatz zum im Stand der Technik bekannten Vorgehen mittels Deep-Learning-Technologien, bei denen während des Trainings mittels Lerndaten eine Zielfunktion mit sehr vielen Termen - typischerweise mehr als 100000 Termen - erlernt wird, wird vorliegend also eine Zielfunktion optimiert, die im Vergleich dazu, sehr wenige Terme umfasst. Dies hat den Vorteil, dass die Zielfunktion interpretierbar und erklärbar ist und für den weiteren Wissensgewinn genutzt werden kann. Besonders bevorzug wird die Zielfunkton vorliegend nicht an Lerndaten erlernt und das Ermitteln des dreidimensionalen Hüllkörpers findet bevorzugt nicht mittels maschinellen Lernens statt.

Es handelt sich also in anderen Worten gerade nicht um ein Blackbox-Verfahren, sondern um ein Whitebox-Verfahren, bei dem der Bezug der Zielfunktion zu einzelnen Parametern vom Nutzer verstanden werden kann.

Durch das Verfahren wird ein dreidimensionaler Hüllkörper, bevorzugt ein konvexer Hüllkörper, und besonders bevorzugt ein Quader, für das auf den ersten Daten dargestellten Objekt ermittelt. Bevorzugt handelt es sich bei dem Hüllkörper um einen achsenparallelen Quader. Die ersten Daten weisen wenigstens drei Raumdimensionen auf, so dass sich im Prinzip das Objekt durch Auftragen der ersten Daten in einem dreidimensionalen Raster visualisieren lässt. Die jeweiligen Werte eines Datenpunktes für die drei Raumdimensionen werden auch als Raumkoordinaten (x, y, z) bezeichnet.

Im ersten Schritt des Verfahrens werden die Informationsdaten des zweidimensionalen minimal umgebenden Polygons, und bevorzugt des zweidimensionalen minimal umgebenden Rechteckes empfangen. Bevorzugt handelt es sich beim zweidimensionalen minimal umgebenden Rechteck um ein achsenparalleles Rechteck (englisch: *Axis Aligned Bounding Box*, AABB) des Objektes auf den zweiten Daten. Die zweiten Daten umfassen wenigstens die zwei Raumdimensionen. Somit lässt sich das auf den zweiten Daten dargestellte Objekt also durch Auftragen der zweiten Daten in einem zweidimensionalen Raster bevorzugt bildlich darstellen. Die jeweiligen Werten eines Datenpunktes für die zwei Raumdimensionen werden auch als Bildkoordinaten (x, y) bezeichnet.

Ein AABB ist ein spezielles minimal umgebendes Polygon für das auf den zweiten Daten dargestellte Objekt, wobei das Objekt bevorzugt alle vier Seiten des AABB berührt. Es gibt für ein kompaktes - sprich abgeschlossenes und beschränktes 2D-Objekt genau eine AABB. Dieses ist das kleinstmögliche achsenparallele Rechteck, das das Objekt einschließt. Das AABB kann beispielsweise über eine Minimums- und Maximumssuche über Koordinaten aller Eckpunkte des Objektes in den zweiten Daten ermittelt werden.

Das zweidimensionale minimal umgebenden Polygon und bevorzugt das AABB wird also durch seine Informationsdaten, die die Größe, besonders bevorzugt die Länge der zwei Seiten des Rechteckes, und die Position, besonders bevorzugt die Bildkoordinaten eines Punktes, beispielsweise eines Eckpunktes oder der Mitte des Rechteckes, in den zweiten Daten spezifizieren, definiert.

Die ersten Daten und die zweiten Daten stellen bevorzugt das gleiche Objekt dar. Bevorzugt stellen die ersten und die zweiten Daten das gleiche Objekte zum im wesentlichen gleichen Zeitpunkt dar. Die ersten Daten und die zweiten Daten sind also bevorzugt miteinander zeitlich korreliert. Vorliegend bedeutet zum wesentlich gleichen Zeitpunkt bzw. zeitlich korreliert bevorzugt, dass ein Aufnahmezeitpunkt der zweiten Daten - also derjenigen Daten, die wenigstens zwei Raumdimensionen aufweisen - zwischen einem Anfangsaufnahmezeitpunkt und einem Endaufnahmezeitpunkt der ersten Daten liegt, also derjenigen Daten, die wenigstens drei Raumdimensionen aufweisen.

In einem weiteren Schritt des Verfahrens wird die Projektionsmatrix empfangen. Die Projektionsmatrix definiert die mathematische Abbildung eines dreidimensionalen Datenpunktes der ersten Daten auf einen zweidimensionalen Datenpunkt in den zweiten Daten. Durch Anwenden der Projektionsmatrix auf die Raumkoordinaten wird also eine Bildkoordinate generiert.

In einem weiteren Schritt des Verfahrens wird der dreidimensionale Hüllkörper, besonders bevorzugt der Quader ermittelt, indem das mathematische Optimierungsverfahren mit der Zielfunktion durchgeführt wird.

Dabei werden als Ausgangspunkt die Informationsdaten des dreidimensionalen Hüllkörpers zunächst initiiert. Diese umfassen die Größe, die Position und die Orientierung des Hüllkörpers in den ersten Daten. Der dreidimensionale Hüllkörper und bevorzugt der Quader wird also durch seine Informationsdaten, die die Größe, besonders bevorzugt die Länge der drei Seiten des Quaders, die Position, besonders bevorzugt die Raumkoordinaten eines Punktes, beispielsweise eines Eckpunktes oder der Mitte des Quaders, und die Orientierung, besonders bevorzugt drei Winkel, beispielsweise die Roll-Nick-Gier-Winkel, spezifizieren, definiert.

In einem weiteren Schritt werden Informationsdaten eines weiteren zweidimensionalen minimal umgebenden Polygons, und bevorzugt AABB, durch projizieren des initiierten Hüllkörpers mittels der empfangenen Projektionsmatrix generiert. In anderen Worten wird also bevorzugt der initiierte Hüllkörper mittels der Projektionsmatrix in die zweidimensionalen Bildkoordinaten projiziert.

Danach wird bevorzugt eine Konsistenzprüfung durchgeführt, indem die generierten Informationsdaten mit den empfangenen Informationsdaten verglichen werden. Bevorzugt wird also das Ergebnis der Projektion mit dem ursprünglich empfangenen AABB verglichen. Bevorzugt werden die Schritte Initiieren, Generieren und Vergleichen mehrfach durchgeführt, bis ein Abbruchkriterium insbesondere im Hinblick auf die Konsistenzprüfung erreicht ist.

Gemäß einer bevorzugten Weiterbildung der Erfindung ist vorgesehen, dass es sich den ersten Daten um eine mittels eines Lidar- oder Radar- Sensors aufgezeichnete Punktwolke handelt. Die ersten Daten sind also bevorzugt dünnbesetzte Daten, da der Lidar- oder Radarsensor lediglich an wenigen diskreten Raumkoordinaten einen Wert aufzeichnet.

Gemäß einer bevorzugten Weiterbildung der Erfindung ist vorgesehen, dass es sich bei den zweiten Daten um mittels einer Kamera aufgezeichnete Bilddaten handelt. Besonders bevorzugt ist vorgesehen, dass die Projektionsmatrix durch die Orientierung und die Position des zur Aufzeichnung der ersten Daten verwendeten Sensors zur Kamera definiert ist.

Im Prinzip ist es möglich, dass die empfangenen Informationsdaten des zweidimensionalen minimal umgebenden Polygons durch manuelle Annotation der mittels der Kamera aufgezeichneten Bilddaten zu generieren. Bevorzug ist allerdings vorgesehen, dass die durch die Kamera aufgezeichnete Bilddaten mittels maschinellen Lernens ausgewertet werden und derart das zweidimensionale minimale Polygon und bevorzugt das AABB ermittelt wird. Besonders bevorzugt umfassen die empfangenen Informationsdaten nicht lediglich die Größe und Position des zweidimensionalen minimal umgebenden Polygons, sondern zusätzlich eine im Wesentlichen vertikal ausgerichtete Linie, die jene im Wesentlichen vertikal verlaufende Kante des auf den zweiten Daten dargestellten Objektes identifiziert, die der aufzeichnenden Kamera am nächsten ist. Diese Linie ermöglicht insbesondere beim Lösen des mathematischen Optimierungsverfahrens, dass beim Initiieren der Informationsdaten des dreidimensionalen Hüllkörpers des Objektes, ein sinnvoller Ausgangswert für die Orientierung des Hüllkörpers in den ersten Daten definiert werden kann. Im Wesentlichen vertikal umfasst im Rahmen dieser Erfindung bevorzugt vertikale Linien ± 45 Grad.

Gemäß einer weiteren bevorzugten Weiterbildung der Erfindung ist vorgesehen, dass das Verfahren den Schritt Empfangen der ersten Daten umfasst, wobei bei dem Ermitteln des dreidimensionalen Hüllkörpers des Objektes mittels des mathematischen Optimierungsverfahrens die empfangenen Daten berücksichtigt werden. Besonders gute Ergebnisse beim Ermitteln des dreidimensionalen Hüllkörpers lassen sich erzielen, wenn die ersten Daten bei der Optimierung mitberücksichtigt werden. Dies lässt sich beispielsweise umsetzten, indem dreidimensionale Hüllkörper bei der Optimierung bevorzugt werden, die besonders viele dreidimensionale Datenpunkte der ersten Daten umfassen, oder indem eine Anzahl an dreidimensionaler Datenpunkte außerhalb des Hüllkörpers minimiert werden.

In Zusammenhang mit dem mathematischen Optimierungsverfahren ist es im Prinzip möglich, alle neun vorhandenen Variablen des dreidimensionalen Hüllkörpers des Objektes - bevorzugt drei Raumkoordinaten für die Position, drei Längen für die Größe und drei Winkel für die Orientierung - mittels einer Zielfunktion gemeinsam zu optimieren. Gemäß einer bevorzugten Weiterbildung der Erfindung ist allerdings vorgesehen, dass das mathematische Optimierungsverfahren ein Optimieren dreier Zielfunktionen mit jeweils weniger als 100000 Terme umfasst, wobei mittels der ersten Zielfunktion ausschließlich die Position des dreidimensionalen Hüllkörpers optimiert wird, mittels der zweiten Zielfunktion ausschließlich die Größe des dreidimensionalen Hüllkörpers optimiert wird, und mittels der dritten Zielfunktion ausschließlich die Orientierung des dreidimensionalen Hüllkörpers optimiert wird. Es hat sich herausgestellt, dass das separate Optimieren der Position, der Größe und der Orientierung den Vorteil aufweist, dass die Zielfunktionen weniger komplex sind und die Terme der Zielfunktionen einen Bezug zu empirischen Beobachtungen aufweisen. Bevorzugt weist jede der drei Zielfunktionen weniger als 10000 Terme auf, weiter bevorzugt weniger als 1000 Terme, und besonders bevorzugt weniger als 100 Terme. Durch dieses Vorgehen werden die Optimierungen voneinander entzerrt.

Besonders bevorzugt ist gemäß einer weiteren Weiterbildung in diesem Zusammenhang vorgesehen, dass das mathematische Optimierungsverfahren ein iteratives Optimieren, bevorzugt Minimieren, der drei Zielfunktion umfasst und mit der ersten Zielfunktion begonnen wird. Es hat sich gezeigt, dass die Optimierung besonders gute und besonders schnell Ergebnisse liefert, wenn mit der Optimierung der Position des dreidimensionalen Hüllkörpers begonnen wird und sich die anderen zwei Optimierungen - Größe und Orientierung - daran anschließen. Bevorzugt wird nach der Optimierung der Größe die Orientierung optimiert. Zudem wird weiter bevorzugt nach der jeweils ersten Optimierung der Position, der Größe und der Orientierung, erneut mit der Optimierung der Position begonnen.

In Bezug zur Optimierung der Position mittels der ersten Zielfunktion ist bevorzugt vorgesehen, dass zwei der drei Raumkoordinaten aufgrund ihrer linearen Abhängigkeit in einen Tiefenparameter überführt werden. Bei einem rechtshändigen Raumkoordinatensystem, bei dem die z-Achse durch die Tiefendetektion des Lidar- oder Radarsensors und die y-Achse durch die Lotrichtung definier ist, können die Raumkoordinaten x und z in den Tiefenparameter überführt werden. Dies ist möglich, da für eine vorhandenen Sichtachse des Sensors, der zum Aufzeichnen der ersten Daten verwendet wird, die Raumkoordinaten durch die Überführung in die Bildkoordinaten linear voneinander abhängig sind.

In Bezug zur ersten Zielfunktion ist gemäß einer weiteren bevorzugten Weiterbildung der Erfindung vorgesehen, dass die erste Zielfunktion wenigstens einen Term umfasst, und bevorzugt eine Linearkombination wenigstens dreier Terme ist. Auch mit lediglich drei Termen ist es möglich sehr gute passende dreidimensionale Hüllkörper zu ermitteln.

In Bezug zum ersten Term ist in diesem Zusammenhang bevorzugt vorgesehen, dass der erste Term ein 2D-3D-Konsistenzterm ist, der durch das Vergleichen der generierten

Informationsdaten mit den empfangenen Informationsdaten ermittelt wird. Besonders bevorzugt umfasst der erste Term den Jaccard-Koeffizienten, auch *Intersection over Union* genannt, um die Ähnlichkeit des rückprojizierten zweidimensionalen minimal umgebenden Polygons mit dem ursprünglich empfangenen zweidimensionalen minimal umgebenden Polygon zu ermitteln. Diesbezüglich ist es besonders vorteilhaft, wenn zum Ermitteln des 2D-3D-Konsistenszterms die Mitte des rückprojizierten, zweidimensionalen minimal umgebenden Polygons auf die Mitte des ursprünglich empfangenen, zweidimensionalen minimal umgebenden Polygons gelegt wird, da derart kleinere Projektionsfehler keinen Einfluss haben. Zudem ist es vorteilhaft, wenn der 2D-3D-Konsistenzterm einen Toleranzterm umfasst, so dass der 2D-3D-Konsistenzterm auch bei nicht ideal übereinstimmenden Polygonen seinen Minimalwert (oder alternativ seinen Maximalwert) aufweist.

Alternativ oder zusätzlich ist bevorzugt vorgesehen, dass der zweite Term ein 3D-Punktepopulationsterm ist, der durch ein Ermitteln einer Anzahl an dreidimensionaler Datenpunkte der ersten Daten innerhalb des initiierten und/oder ermittelten dreidimensionalen Hüllkörpers des Objektes ermittelt wird.

In diesem Zusammenhang ist bevorzugt vorgesehen, dass das Verfahren den Schritt Empfangen der ersten Daten umfasst. In anderen Worten wird also ermittelt, wie viele dreidimensionaler Datenpunkte innerhalb des dreidimensionalen Hüllkörpers vorhanden sind. Bevorzugt wird bei der Ermittlung der Anzahl an dreidimensionaler Datenpunkte innerhalb des Hüllkörpers bei der Optimierung der Position des dreidimensionalen Hüllkörpers - bevorzugt des Tiefenparameters - der Hüllkörper nicht als Quader definiert, sondern als Zylinder dessen Rotationsachse parallel zur y-Achse ist, oder als Kugel. Dies hat den Vorteil, dass Fehler in Bezug zur Orientierung des initiierten und/oder ermittelten Hüllkörpers aufgrund der Rotationssymmetrie keinen Einfluss haben. Weiter bevorzugt ist vorgesehen, dass die Ausdehnung des Zylinders entlang der Rotationsachse nicht in die Ermittlung der Anzahl an dreidimensionaler Datenpunkte einfließt, da derart die Robustheit des zweiten Terms gegenüber Fehlern in Bezug zur Ermittlung der Bodenebene (englisch: *ground plane*) erhöht werden kann.

Zudem kann weiter bevorzugt vorgesehen sein, dass der Punktepopulationsterm normiert wird, indem eine Anzahl an dreidimensionaler Datenpunkte der ersten Daten ermittelt wird, die nach der Projektion mittels der Projektionsmatrix innerhalb des zweidimensionalen minimal umgebenden Polygons liegen, das durch die empfangenen Informationsdaten definiert ist. Weiterhin kann der Punktepopulationsterm dadurch normiert werden, indem eine Anzahl an dreidimensionaler Datenpunkte der ersten Daten ermittelt wird, die innerhalb eines Pyramidenstumpfes oder Kegelstumpfes liegen, das den gleichen Öffnungswinkel aufweist, wie das zweidimensionale minimal, umgebende Polygon, das durch die empfangenen Informationsdaten definiert ist.

Alternativ oder zusätzlich ist weiter bevorzugt vorgesehen, dass der dritte Term ein Hüllkörper-Abstandsterm ist, der durch Ermitteln eines Abstandes einer Fläche des Hüllkörpers zu einer Seite, und bevorzugt einer dem Lidar- oder Radar- Sensor zugewandten Seite des Objektes ermittelt wird. In Bezug zu den ersten Daten werden Objekte aufgrund ihrer Eigenverschattung (englisch: *self occlusion*) nur auf Flächen vom Sensor abgetastet, die in Richtung des Sensors ausgerichtet sind. Entsprechend ist es vorteilhaft lokale Informationen - vorliegend bevorzugt eine lokale Punktdichte der ersten Daten zu verwenden, um dem Sensor zugewandte Fläche des Objektes in den ersten Daten zu identifizieren - und diese zu nutzen, um den dreidimensionalen Hüllkörper möglichst dicht an diese zur Fläche zählenden dreidimensionalen Datenpunkte heranzuschieben. Bevorzugt begünstigt der Hüllkörper-Abstandsterm während der Optimierung Positionen des dreidimensionalen Hüllkörpers, bei denen der Abstand des dreidimensionalen Hüllkörpers zu der dem Sensor zugewandte Fläche des Objektes möglichst gering ist.

Weiter bevorzugt ist vorgesehen, dass der 2D-3D-Konsistenzterm der ersten Zielfunktion einen Abstands-Term umfasst, der bevorzugt Positionen des dreidimensionalen Hüllkörpers, die hohe Entfernungen zum Lidar- oder Radar- Sensor aufweisen, begünstigt. Der Abstands-Term verhält sich bevorzugt linear zur Entfernung zum Lidar- oder RadarSensor und hebt die Symmetrie der Konsistenzberechnung mittels des Jaccard-Koeffizienten auf. Bei ersten Daten, bei denen die lokale Punktdichte besonders gering ist, können mehrere Positionen des dreidimensionalen Hüllkörpers bei einer Zielfunktion, die die oben beschriebenen drei Terme umfasst, ähnlich hohe Werte aufweisen und entsprechend kann bei der Optimierung nicht eine Position bevorzugt werden. Diese lässt sich bevorzugt vermeiden indem der 2D-3D-Konsistenzterm auch den Abstands-Term aufweist und derart während der Optimierung Positionen des dreidimensionalen Hüllkörpers bevorzugt werden, die große Abstände zum Lidar- oder Radar-Sensor aufweisen und den dreidimensionalen Hüllkörper näher an die dem Sensor zugewandte Fläche des Objektes heranzuschieben.

Besonders bevorzugt umfasst die erste Zielfunktion den 2D-3D-Konsistenzterm, den 3D-Punktepopulationsterm und den Hüllkörper-Abstandsterm. Zudem ist gemäß einer bevorzugten Weiterbildung der Erfindung vorgesehen, dass der erste Term eine höhere Gewichtung und bevorzugt eine doppelte Gewichtung ± 20% als der zweite Term aufweist, und der zweite Term eine höhere Gewichtung und bevorzugt eine wenigstens 50-mal so hohe Gewichtung als der dritte Term aufweist. Es hat sich herausgestellt, dass diese Gewichtungen eine besonders gute Ermittlung des dreidimensionalen Hüllkörpers mittels des mathematischen Optimierungsverfahrens ermöglichen.

Wie bereits erwähnt wird mittels der zweiten Zielfunktion bevorzugt ausschließlich die Größe des dreidimensionalen Hüllkörpers optimiert. Diesbezüglich ist gemäß einer weiteren bevorzugten Weiterbildung der Erfindung vorgesehen, dass die zweite Zielfunktion wenigstens einen Term umfasst, und bevorzugt eine Linearkombination wenigstens zweier Terme ist.

Bevorzugt ist der erste Term ein 2D-3D-Konsistenzterm, der durch das Vergleichen der generierten Informationsdaten mit den empfangenen Informationsdaten ermittelt wird. Analog zur ersten Zielfunktion umfasst bevorzugt auch die zweite Zielfunktion den 2D-3D-Konsistenzterm.

Alternativ oder zusätzlich ist weiter bevorzugt vorgesehen, dass der zweite Term der zweiten Zielfunktion ein Vorwissensterm ist, und das Verfahren bevorzugt den Schritt Empfangen eines Klassifizierungsergebnisses des Objektes umfasst. In Bezug zur Größe des dreidimensionalen Hüllkörpers wird also bevorzugt auf von der Klasse des Objektes abhängige vordefinierte Größenverteilungen und besonders bevorzugt Gaußverteilungen der Größe zurückgegriffen. Beispielsweise wird für Kleinwagen eine erste vordefinierten Größenverteilung verwendet und/oder für Lastwagen eine zweite vordefinierte Größenverteilung. Im Prinzip lässt sich die Größe von Objekten, insbesondere Fahrzeugen, durch Gaußsche-Mischmodelle beschreiben. Ein Mischmodell ist ein Modell zur Darstellung des Vorhandenseins von Teilpopulationen innerhalb einer Gesamtpopulation. Bevorzugt favorisiert der Vorwissensterm während der Optimierung unter Berücksichtigung des Klassifizierungsergebnisses Größen des Objektes die nahe am Mittel- und/oder Medianwert der entsprechenden Teilpopulationen liegen. Dies lässt sich beispielsweise über bedingte Wahrscheinlichkeitsverteilungen mathematisch formulieren.

Weiter bevorzugt ist vorgesehen, dass die zweite Zielfunktion den ersten und den zweiten Term umfasst. In dieser Hinsicht ist gemäß einer bevorzugten Weiterbildung der Erfindung vorgesehen, dass der erste Term und der zweite Term gleich stark ± 20% gewichtet sind. Dies führt zu besonders guten Ergebnissen bei der Ermittlung des dreidimensionalen Hüllkörpers.

Zudem kann die zweite Zielfunktion weiterhin einen 3D-Punktepopulationsterm umfassen, der durch ein Ermitteln einer Anzahl an dreidimensionaler Datenpunkte der ersten Daten innerhalb des initiierten und/oder ermittelten dreidimensionalen Hüllkörpers des Objektes ermittelt wird. Diesbezüglich ist besonders bevorzugt vorgesehen, dass im Gegensatz zur Positionsoptimierung die Ausdehnung des Hüllkörpers entlang der z-Achse bei der Größenoptimierung mitbetrachtet wird. Weiterhin ist in diesem Zusammenhang bevorzugt vorgesehen, dass das Verfahren den Schritt empfangen der ersten Daten umfasst.

Ebenfalls kann die zweite Zielfunktion analog zur ersten Zielfunktion einen Hüllkörper-Abstandsterm umfassen, der während der Optimierung Größen des dreidimensionalen Hüllkörpers, bei denen der Abstand des dreidimensionalen Hüllkörpers zu der dem Sensor zugewandte Fläche des Objektes möglichst gering ist, begünstigt.

Wie bereits erwähnt wird mittels der dritten Zielfunktion bevorzugt ausschließlich die Orientierung des dreidimensionalen Hüllkörpers optimiert. Diesbezüglich ist gemäß einer weiteren bevorzugten Weiterbildung der Erfindung vorgesehen, dass die dritte Zielfunktion wenigstens einen Term umfasst, und bevorzugt eine Linearkombination wenigstens zweier Terme ist.

Bevorzugt ist der erste Term ein 2D-3D-Konsistenzterm, der durch das Vergleichen der generierten Informationsdaten mit den empfangenen Informationsdaten ermittelt wird. Analog zur ersten und zweiten Zielfunktion umfasst auch die dritte Zielfunktion bevorzugt einen 2D-3D-Konsistenzterm. In diesem Zusammenhang ist bevorzugt vorgesehen, dass der die Orientierung betreffende 2D-3D-Konsistenzterm ein Seitenverhältnis des rückprojizierten zweidimensionalen minimal umgebenden Polygons sowie ein Seitenverhältnis des ursprünglich empfangenen zweidimensionalen minimal umgebenden Polygons beim Vergleichen berücksichtigt. Insbesondere der Gier-Winkel, eine Rotation um die y-Achse (Lotachse) beeinflusst das Seitenverhältnis des rückprojizierten AABB.

Alternativ oder zusätzlich ist weiter bevorzugt vorgesehen, dass der zweite Term ein 3D-Punktepopulationsterm ist, der durch ein Ermitteln einer Anzahl an dreidimensionaler Datenpunkte der ersten Daten innerhalb des initiierten und/oder ermittelten dreidimensionalen Hüllkörpers des Objektes ermittelt wird. Analog zur ersten Zielfunktion und zweiten Zielfunktion, umfasst bevorzugt auch die dritte Zielfunktion den 3D-Punktepopulationsterm. Besonders bevorzugt wird diesbezüglich aber im Gegensatz zur ersten Zielfunktion der Hüllkörper bei der dritten Zielfunktion gerade nicht als Zylinder oder Kugel definiert. Weiterhin besteht auch die Möglichkeit die Ausdehnung des dreidimensionalen Hüllkörpers entlang der y-Achse (Lotachse) nicht in die Ermittlung der Anzahl an dreidimensionaler Datenpunkte einfließen zu lassen, da derart die Robustheit des zweiten Terms gegenüber Fehlern in Bezug zur Ermittlung der Bodenebene (englisch: *ground plane*) erhöht werden kann.

Ebenfalls kann die dritte Zielfunktion analog zur ersten Zielfunktion einen Hüllkörper-Abstandsterm umfassen, der während der Optimierung Orientierungen des dreidimensionalen Hüllkörpers, bei denen der Abstand des dreidimensionalen Hüllkörpers zu der dem Sensor zugewandte Fläche des Objektes möglichst gering ist, begünstigt.

Bevorzugt umfasst die dritte Zielfunktion den ersten und den zweiten Term. Weiter bevorzugt ist gemäß einer bevorzugten Weiterbildung der Erfindung vorgesehen, dass der erste Term eine höhere Gewichtung und bevorzugt eine zweimal so hohe Gewichtung ± 20% als der zweite Term aufweist. Es hat sich gezeigt, dass eine solche Gewichtung zu besonders guten Ergebnissen bei der Ermittlung des dreidimensionalen Hüllkörpers führt.

In Zusammenhang mit dem Lösen des mathematischen Optimierungsverfahrens ist gemäß einer weiteren bevorzugten Weiterbildung vorgesehen, dass zum Durchführen des mathematischen Optimierungsverfahrens ein Algorithmus verwendet wird, der zum Bestimmen der Suchrichtung nicht einen Gradienten oder finite Differenzen verwendet. Besonders bevorzugt wird also ein Algorithmus aus der Gruppe der sogenannten *Random Search Algorithms* verwendet. Da diese nicht auf den Gradienten oder auf finite Differenzen zum Finden eines Minimums oder Maximums angewiesen sind, eignen sich diese Algorithmen besonders gut, um nicht-stetige und/oder nicht ableitbare Zielfunktionen zu optimieren.

Im Prinzip ist es möglich, dass das Verfahren mit statischen - sprich keine Zeitdimension umfassenden ersten und zweiten Daten angewendet wird. In jenem Fall werden also bevorzugt die Informationsdaten eines zweidimensionalen minimal umgebenden Polygons, bevorzugt eines zweidimensionalen minimal umgebenden Rechteckes, für das auf einem Kamerabild dargestellte Objekt empfangen, sowie die zeitlich korreliert dazu aufgezeichneten ersten Daten des Lidar- oder Radarsensors. Allerdings weisen die ersten und die zweiten Daten bevorzugt eine Zeitdimension auf, also in Bezug zu den ersten Daten mehrere zeitlich aufeinanderfolgende Lidar- oder Radarsensordaten und in Bezug zu den zweiten Daten mehrere zeitlich aufeinanderfolgende Bilddaten. Bevorzugt ist vorgesehen, dass bei eine Zeitdimension aufweisenden zweiten Daten ein Objekttracking durchgeführt wird, und durch das Objekttracking gewonnene Informationen bei dem mathematischen Optimierungsverfahren berücksichtig werden. Bevorzugt werden die zeitlich aufeinanderfolgenden Bilddaten miteinander verglichen, um derart sich bewegende Objekte und/oder statische Objekte zu identifizieren, und festzustellten, ob es sich bei einem dargestellten Objekt, um ein Objekt handelt, das auch in zeitlich früheren und/oder auch in zeitlich späteren Bilddaten dargestellt ist. Bei sich bewegenden Objekten wird bevorzugt eine Trajektorie des Objektes erfasst. Gemäß einer bevorzugten Weiterbildung der Erfindung ist also vorgesehen, dass die ersten Daten und die zweiten Daten jeweils eine Zeitdimension aufweisen und

a) bei der Optimierung berücksichtigt wird, dass sich der ermittelte dreidimensionale Hüllkörper in seiner Form über die Zeit für das Objekt nicht mehr als ein vordefinierter Grenzwert ändert.

Es wird also bevorzugt bei der Optimierung ein sich über die Zeit nicht in seiner Form verändernder Hüllkörper, insbesondere ein sich nicht in seiner Größe ändernder Hüllkörper, begünstigt. Bildlich gesprochen wird also bei der Optimierung die Tatsache ausgenutzt, dass sich die Größe beispielsweise eines Fahrzeuges, das auf zeitlich aufeinanderfolgenden Bilddaten dargestellt ist, nicht plötzlich ändern kann.

Weiter bevorzugt ist vorgesehen, dass die ersten Daten und die zweiten Daten jeweils eine Zeitdimension aufweisen und

b) bei der Optimierung berücksichtigt wird, dass

- Sprungstellen einer Trajektorie des ermittelten dreidimensionalen Hüllkörpers eine vordefinierte Größe nicht überschreiten, und/oder
- der ermittelte dreidimensionale Hüllkörper eine vordefinierte instantane Geschwindigkeit nicht über- und/oder unterschreitet, und/oder
- der ermittelte dreidimensionale Hüllkörper eine vordefinierte instantane Beschleunigung nicht über- und/oder unterschreitet.

In anderen Worten wird also ebenfalls die Konsistenz der Trajektorie, in Bezug zu Position, der Geschwindigkeit und der Beschleunigung des Hüllkörpers verwendet, um möglichst Konsistente Ergebnisse bei der Optimierung zu bevorzugen. Bildlich gesprochen wird also bei der Optimierung die Tatsache ausgenutzt, dass sich beispielsweise ein auf aufeinanderfolgenden Bilddaten dargestelltes Fahrzeug in einer kontinuierlichen Art und Weise durch den Raum bewegt.

Die Aufgabe der Erfindung wird zudem durch eine Vorrichtung zur Datenverarbeitung umfassend Mittel zur Ausführung des obigen beschriebenen Verfahrens gelöst.

Weiterhin betrifft die Erfindung ein Computerprogrammprodukt, umfassend Befehle, die bei der Ausführung des Programms durch einen Computer diesen veranlassen, das obige beschriebene Verfahren auszuführen.

Ferner wird erfindungsgemäß ein computerlesbarer Datenträger bereitgestellt, auf dem das obige Computerprogrammprodukt gespeichert ist.

Die technischen Vorteile der Vorrichtung zur Datenverarbeitung, des Computerprogrammproduktes und des computerlesbaren Datenträgeres ergeben sich für den Fachmann durch die Beschreibung des Verfahrens zum Bestimmen zum Ermitteln eines dreidimensionalen Hüllkörpers, sowie durch die nachfolgend beschriebenen Ausführungsbeispiele.

In der Zeichnung zeigen

Fig. 1  schematisch ein Ablaufdiagramm eines computerimplementierten Verfahrens zum Ermitteln eines dreidimensionalen Hüllkörper, gemäß einem bevorzugten Ausführungsbeispiel der Erfindung,

Fig. 2  schematisch eine Darstellung eines 2D-3D-Konsistenzterms einer Zielfunktion, die bei einer Positionsoptimierung des Verfahrens zum Ermitteln des dreidimensionalen Hüllkörpers aus Figur 1 verwendet wird,

Fig. 3  schematisch eine Darstellung des Vorganges zum Ermitteln eines 3D-Punktepopulationsterm einer Zielfunktion, die bei einer Positionsoptimierung des Verfahrens zum Ermitteln des dreidimensionalen Hüllkörpers aus Figur 1 verwendet wird,

Fig. 4  schematisch eine Darstellung einer Summe der in Figur 2 gezeigten Funktion und des 3D-Punktepopulationsterms aus Figur 3,

Fig. 5  schematisch eine Darstellung des Vorganges zum Ermitteln eines Hüllkörper-Abstandsterms einer Zielfunktion, die bei einer Positionsoptimierung des Verfahrens zum Ermitteln des dreidimensionalen Hüllkörpers aus Figur 1 verwendet wird, und

Fig. 6  schematisch eine Darstellung eines 2D-3D-Konsistenzterms einer Zielfunktion, die bei einer Orientierungsoptimierung des Verfahrens zum Ermitteln des dreidimensionalen Hüllkörpers aus Figur 1 verwendet wird.

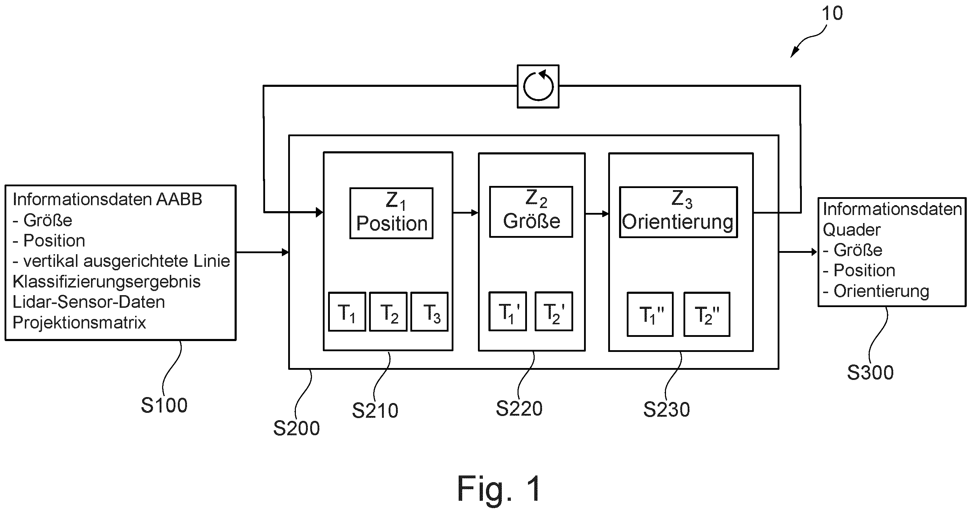

Figur 1 zeigt schematisch einen beispielhaftes Ablaufdiagramm 10 eines computerimplementierten Verfahrens zum Ermitteln eines dreidimensionalen Hüllkörpers gemäß einem bevorzugten Ausführungsbeispiel der Erfindung.

Wie in Figur 1 ersichtlich ist, werden in diesem Ausführungsbeispiel des Verfahrens in einem ersten Schritt S100 Informationsdaten eines zweidimensionalen minimal umgebenden achsenparallelen Rechteckes, (*Axis Aligned Bounding Box*, AABB) von einem auf Bilddaten dargestellte Objekt empfangen. Die Bilddaten weisen zwei Raumdimensionen auf und wurden mit einer Kamera aufgezeichnet.

Die empfangenen Informationsdaten definieren vorliegend die Größe und Position des AABB in den Bilddaten. Zudem umfassen die Informationsdaten eine vertikal ausgerichtete Linie, die jene vertikal verlaufende Kante des auf den Bilddaten dargestellten Objektes identifiziert, die der aufzeichnenden Kamera am nächsten ist. Weiterhin wird ein Klassifizierungsergebnis des auf den Bilddaten dargestellten Objektes empfangen. Im vorliegenden Ausführungsbeispiel wurde das auf den Bilddaten dargestellte Objekt der Klasse PKW-Fahrzeug zugeordnet.

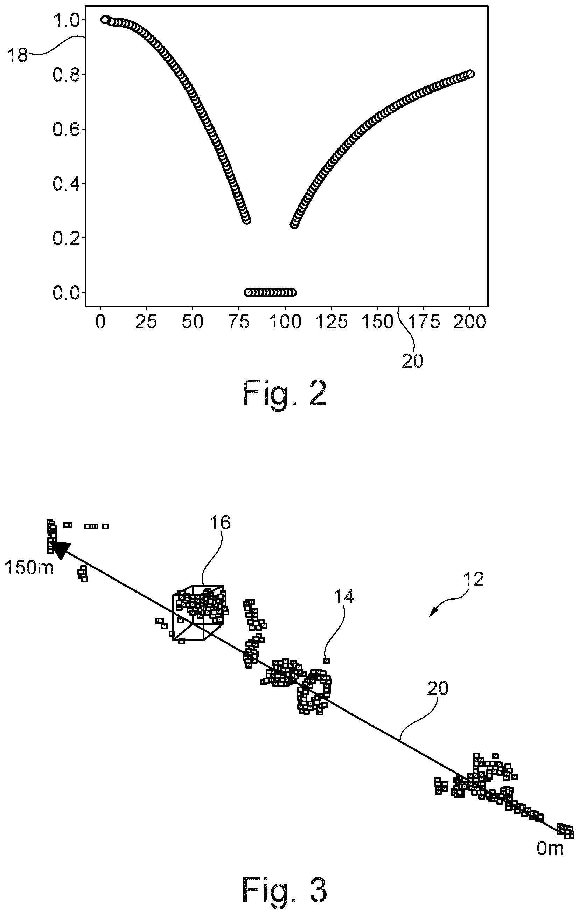

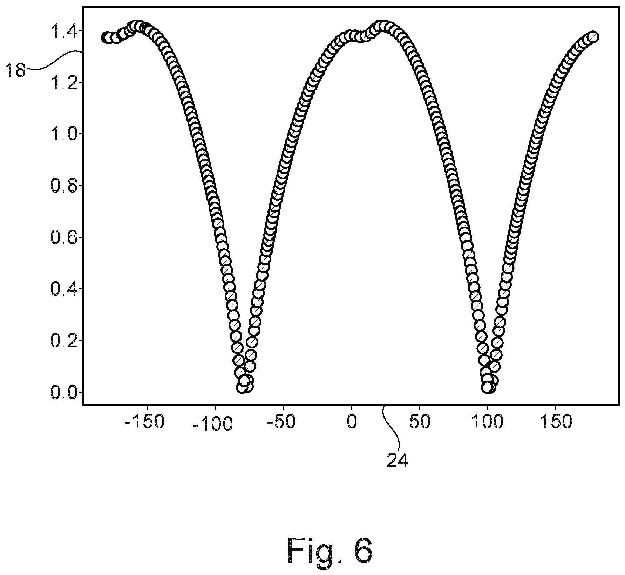

Weiterhin werden im vorliegenden Ausführungsbeispiel im ersten Schritt S 100 Lidar-Sensor-Daten 12 empfangen, die zeitlich korreliert zu den von der Kamera aufgezeichneten Bilddaten sind. Die Lidar-Sensor-Daten 12 weisen drei Raumdimensionen auf. Weiterhin wird eine Projektionsmatrix empfangen, die eine Abbildung eines dreidimensionalen Datenpunktes 14 der Lidar-Sensor-Daten 12 auf einen zweidimensionalen Datenpunkt in den Bilddaten definiert. Exemplarische Lidar-Sensor-Daten 12 sind in den Figuren 3 und 6 gezeigt.

Anschließend wird in Schritt S200 mittels eines mathematischen Optimierungsverfahrens der dreidimensionalen Hüllkörpers, vorliegend in Form eines Quaders 16 (ebenfalls in Figur 6 gezeigt), des Objektes ermittelt. Als Ergebnis des Optimierungsverfahrens liegen also in Schritt S300 Informationsdaten des Quaders 16 vor, wobei diese Informationsdaten eine Größe, eine Position und eine Orientierung des Quaders 16 in den Lidar-Sensor-Daten 12 definieren.

Das mathematische Optimierungsverfahren in Schritt S200 umfasst im vorliegenden Ausführungsbeispiel ein Optimieren dreier Zielfunktionen $Z_1$, $Z_2$, $Z_3$ mit jeweils weniger als 100 Terme, wobei im Schritt S210 mittels der ersten Zielfunktion $Z_1$ ausschließlich die Position des Quaders 16 optimiert wird, im Schritt S220 mittels der zweiten Zielfunktion $Z_2$ ausschließlich die Größe des Quaders 16 optimiert wird, und im Schritt S230 mittels der dritten Zielfunktion $Z_3$ ausschließlich die Orientierung des Quaders 16 optimiert wird. Die drei Zielfunktionen $Z_1$, $Z_2$, $Z_3$ werden iterativ minimiert, wobei an Figur 1 ersichtlich ist, dass zuerst die erste Zielfunktion $Z_1$ minimiert wird, danach die zweite Zielfunktion $Z_2$ und danach die dritte Zielfunktion $Z_3$.

Bei der Optimierung werden jeweils die Informationsdaten des Quaders 16 initiiert, durch projizieren des initiierten Quaders 16 mittels der Projektionsmatrix werden Informationsdaten des rückprojizierten AABB' generiert, und die generierten Informationsdaten des AABB' werden mit den in Schritt S100 empfangen Informationsdaten des ursprünglichen AABB verglichen, wobei dieser Prozess so lange wiederholt wird, bis ein Abbruchkriterium erreicht ist. Zudem werden die empfangenen Lidar-Sensor-Daten 12 bei der Optimierung berücksichtigt, indem Quader 16 bevorzugt werden, die möglichst gut zu den Lidar-Sensor-Daten 12 passen.

Nachfolgend werden die drei Zielfunktionen $Z_1$, $Z_2$, $Z_3$ und der Optimierungsprozess mit Verweis auf die weiteren Figuren 2 bis 6 näher erläutert:

Die erste Zielfunktion $Z_1$ zum Optimieren der Position des Quaders 16 ist vorliegend eine Linearkombination dreier Terme $T_1$, $T_2$, $T_3$. Der erste Term $T_1$ ist vorliegend ein 2D-3D-Konsistenzterm $T_1$, wobei das Ermitteln des 2D-3D-Konsistenzterms das Vergleichen der generierten Informationsdaten mit den empfangenen Informationsdaten umfasst. Figur 2 zeigt schematisch eine Darstellung des 2D-3D-Konsistenzterm $T_1$, der - wie auf der y-Achse 18 von Figur 2 ersichtlich ist - Werte zwischen 0 und 1 annehmen kann.

Vorliegend ist der 2D-3D-Konsistenzterm $T_1$ im Wesentlichen durch folgende Formel definiert, wobei IoU für *Intersection over Union* steht, bei der das ursprüngliche AABB und das rückprojizierte AABB' eine miteinander übereinstimmende Mitte aufweisen:

$$T_1 \approx 1 - IoU(AABB, AABB')$$

Weiterhin ist an Figur 2 ersichtlich, dass der 2D-3D-Konsistenzterm $T_1$ einen Toleranzterm umfasst, so dass der 2D-3D-Konsistenzterm $T_1$ auch bei nicht ideal übereinstimmenden AABBs seinen Minimalwert von 0 aufweist. Die x-Achse 20 in Figur 2 entspricht der Position des Quaders 16 auf der z-Achse 20 eines rechtshändigen Raumkoordinatensystems, bei dem die z-Achse 20 durch die Tiefendetektion des Lidar-Sensors und die y-Achse durch die Lotrichtung definiert ist. Bildlich gesprochen zeigt die Figur 2 also, dass der Quader 16 bei einer angenommenen Position direkt beim Lidar-Sensor bei 0 Metern schlecht positioniert ist, da das rückprojizierte AABB' schlecht mit dem ursprünglichen AABB übereinstimmt, hingegen bei einer Position, die etwa 75 m bis 100 m vom Lidar-Sensor auf der z-Achse 20 entfernt ist, eine gute Übereinstimmung zwischen dem rückprojizierten AABB' und dem ursprünglichen AABB vorhanden ist. Ebenfalls lässt sich aus der in Figur 2 erkennen, dass der 2D-3D-Konsistenzterm $T_1$ einen Abstands-Term umfasst, der hohe Entfernungen zum Lidar-Sensor leicht begünstigt sind und die Symmetrie der *Intersection over Union* aufgehoben ist.

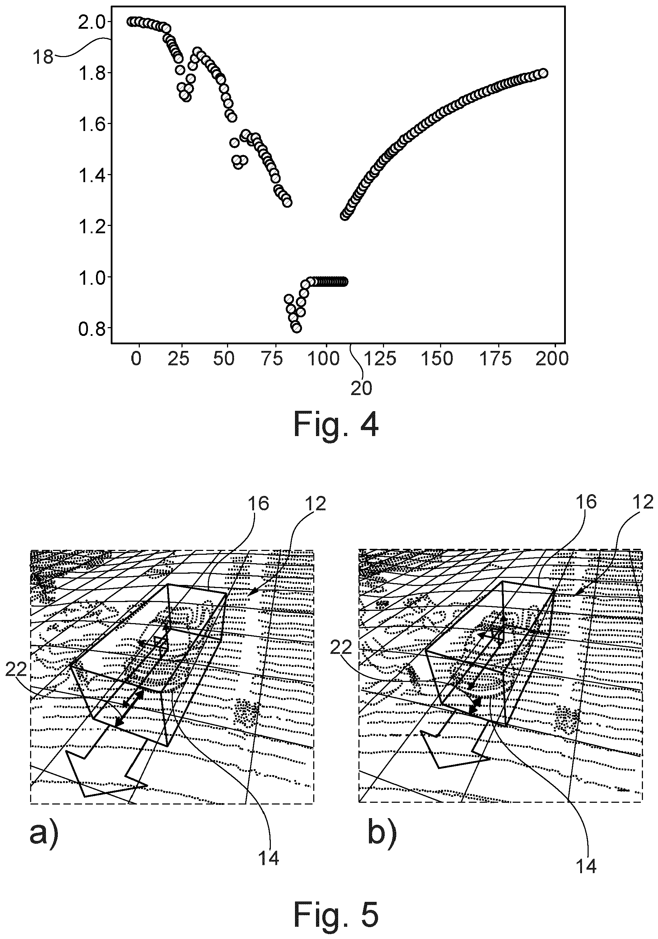

Der zweite Term $T_2$ der ersten Zielfunktion $Z_1$ ist in diesem Ausführungsbeispiel ein 3D-Punktepopulationsterm $T_2$. Figur 3 zeigt schematisch den Vorgang zum Ermitteln des 3D-Punktepopulationsterm $T_2$, während Figur 4 die gewichtete Summe des 2D-3D-Konsistenzterms $T_1$ aus Figur 2 und des 3D-Punktepopulationsterms $T_2$ darstellt.

Der 3D-Punktepopulationsterm $T_2$ wird vorliegend ermittelt, indem zunächst eine Anzahl an dreidimensionaler Datenpunkte 14 der Lidar-Sensor-Daten 12 innerhalb eines durch den Quader 16 mitbestimmten Volumens bestimmt wird. Das Volumen entspricht vorliegend dem eines Zylinder dessen Rotationsachse parallel zur y-Achse des Raumkoordinatensystems ist, und durch das Zentrum des Quaders 16 verläuft. Diese Untergruppe an Punkten wird als $P_{in}$ bezeichnet. Weiterhin wird $P_{in}$ normiert, indem es durch $P_{norm}$ dividiert wird, wobei $P_{norm}$ der Anzahl an dreidimensionaler Datenpunkte 14 der Lidar-Sensor-Daten 12 entspricht, die innerhalb eines Kegelstumpfes liegen, der den gleichen Öffnungswinkel aufweist, wie das AABB, das durch die empfangenen Informationsdaten definiert ist. $T_2$ bestimmt sich vorliegend somit zu:

$$T_2 = 1 - {P_{in}}/{P_{norm}}$$

Bildlich gesprochen wird in Figur 3 also der Quader 16 entlang der z-Achse 14 des Raumkoordinatensystems verschoben und jeweils ermittelt wie viele dreidimensionale Datenpunkte 14 innerhalb eines durch den Quader 16 verlaufenden Zylinders liegen. Zudem zeigt die Figur 3 auch alle andere innerhalb des Kegelstupfes liegende dreidimensionale Datenpunkte 14, deren Anzahl zur Normierung verwendet wird. Aus Figur 4, die die gewichtete Summe von $T_1$ und $T_2$ darstellt, wobei $T_1$ mit dem Faktor 2 gewichtet ist, und $T_2$ mit dem Faktor 1 gewichtet ist, ist ersichtlich, dass bei etwa 25 m, bei etwa 50 m und bei etwa 80 m besonders viele Datenpunkte 14 innerhalb des Zylinders liegen. Die gewichtete Summe aus $T_1$ und $T_2$ weist bei etwa 80 m ein Minimum auf.

Der dritte Term $T_3$ der ersten Zielfunktion $Z_1$ ist in diesem Ausführungsbeispiel ein Hüllkörper-Abstandsterm $T_3$, der durch Ermitteln eines Abstandes einer Fläche des Quaders 16 zu einer dem Lidar-Sensor zugewandten Seite des Objektes ermittelt wird. Figur 5 illustriert schematisch den Vorgang zum Ermitteln des Hüllkörper-Abstandsterms $T_3$. In Figur 5 ist gut ersichtlich, dass das Objekt - vorliegend das PKW-Fahrzeug - nur an Flächen abgetastet wird, die in Richtung des Lidar-Sensors zeigen, so dass für die dem Lidar-Sensor abgewandte Rückseite des PKW-Fahrzeug keine Datenpunkte 14 vorhanden sind. Entsprechend können lokale Informationen der Lidar-Sensor-Daten 12 - vorliegend die lokale Punktdichte der dreidimensionalen Datenpunkte 14 - verwendet werden, um dem Lidar-Sensor zugewandte Flächen des Objektes in den Lidar-Sensor-Daten 12 zu identifizieren. Aufgrund der identifizierten Fläche des Objektes, wird der Hüllkörper-Abstandsterm ermittelt, der während der Optimierung Positionen des Quaders 16 begünstigt, bei denen der Abstand 22 des Quaders 18 zu der dem Sensor zugewandte Fläche des Objektes möglichst gering ist.

Figur 5a) zeigt eine Position des Quaders 16 in den Lidar-Sensor-Daten 12, bei denen der Abstand 22 groß ist und der Hüllkörper-Abstandsterm entsprechend einen hohen Wert aufweist, während Figur 5b) eine Position des Quaders 16 in den Lidar-Sensor-Daten 12 zeigt, bei denen der Abstand 22 gering ist und der Hüllkörper-Abstandsterm entsprechend einen geringen Wert aufweist. Die Position des Quaders 16 wie in Figur 5b) dargestellt, wird während der Optimierung der Position mittels der ersten Zielfunktion $Z_1$ entsprechend bevorzugt. Der dritte Term $T_3$ wird in der ersten Zielfunktion $Z_1$ am geringsten gewichtet.

Im vorliegenden Ausführungsbeispiel ist die erste Zielfunktion $Z_1$ also die folgende Linearkombination der Terme $T_1$, $T_2$, $T_3$:

$$Z_1 = 2\,T_1 + 1\,T_2 + 0{,}01\,T_3$$

Im Schritt S210 wird also mit einer Schätzung für die Orientierung und Größe des Quaders 16 die Position optimiert. In diesem Ausführungsbeispiel ist in Bezug zur Schätzung der Orientierung des Quaders 16 vorgesehen, dass dafür die empfangene vertikale Linie verwendet wird. In Bezug zur Schätzung der Größe des Quaders 16 wird das empfangene Klassifizierungsergebnis verwendet.

Nachdem die Optimierung mittels der ersten Zielfunktion $Z_1$ in Schritt S210 abgeschlossen ist, wird in Schritt 220 mittels der zweiten Zielfunktion $Z_2$, und dem im Schritt S210 erhaltenen optimierten Werte für die Position des Quaders 16, die Größe des Quaders 16 optimiert. Dafür wird im vorliegenden Ausführungsbeispiel eine zweite Zielfunktion $Z_2$ verwendet, die zwei Terme $T_1'$ und $T_2'$ umfasst.

Der erste Term $T_1'$ ist analog zum Term $T_1$ der ersten Zielfunktion $Z_1$ ein 2D-3D-Konsistenzterm, wobei das Ermitteln des 2D-3D-Konsistenzterms das Vergleichen der generierten Informationsdaten mit den empfangenen Informationsdaten umfasst.

Der zweite Term $T_2'$ ist ein Vorwissensterm $T_2'$ und berücksichtig das Klassifizierungsergebnis des Objektes. Vorliegend ist der Vorwissensterm $T_2'$ wie folgt definiert:

$$T_2' = 1 - P(M|K)$$

wobei M ein Gaußsches-Mischmodell der Größenverteilungen der möglichen Klassen K ist, und $P(M|K)$ für die bedingte Wahrscheinlichkeit steht und die Wahrscheinlichkeit für die Größe des Objektes unter der Bedingung des Klassifizierungsergebnisses des Objektes beschreibt. Derart werden während der Optimierung vom Vorwissensterm $T_2'$ Größen des Quaders 16 favorisiert, die die nahe am Mittel- und/oder Medianwert der entsprechenden Teilpopulationen der Klasse K liegen.

Im vorliegenden Ausführungsbeispiel ist die zweite Zielfunktion $Z_2$ also die folgende Linearkombination der Terme $T_1'$, und $T_2'$:

$$Z_2 = T_1' + T_2'$$

Nachdem die Optimierung mittels der zweiten Zielfunktion $Z_2$ in Schritt S220 abgeschlossen ist, wird in Schritt S230 mittels der dritten Zielfunktion $Z_3$, und dem in den Schritten S210 und S220 erhaltenen optimierten Werte für die Position und die Größe des Quaders 18, die Orientierung des Quaders 18 optimiert. Dafür wird im vorliegenden Ausführungsbeispiel eine dritte Zielfunktion $Z_3$ verwendet, die zwei Terme $T_1''$ und $T_2''$ umfasst.

Der erste Term $T_1''$ ist analog zum Term $T_1$ der ersten Zielfunktion $Z_1$ ein 2D-3D-Konsistenzterm, wobei das Ermitteln des 2D-3D-Konsistenzterms $T_1''$ das Vergleichen der durch Rückprojektion des AABB generierten Informationsdaten mit den empfangenen Informationsdaten des AABB umfasst.

Figur 6 zeigt schematisch eine Darstellung des 2D-3D-Konsistenzterm $T_1''$ der - wie auf der y-Achse 18 von Figur 6 ersichtlich ist - Werte zwischen 0 und 1,4 annehmen kann. Vorliegend ist der 2D-3D-Konsistenzterm $T_1''$ durch folgende Formel definiert, wobei SV für das Seitenverhältnis des ursprünglichen AABB, und SV' für das Seitenverhältnis des rückprojizierten AABB' steht.

$$T_1'' = |SV - SV'| + \left| \frac{\dfrac{1}{SV} - \dfrac{1}{SV'}}{2} \right|$$

Insbesondere der Gier-Winkel, eine Rotation um die y-Achse (Lotachse) des Raumkoordinatensystems beeinflusst das Seitenverhältnis des rückprojizierten AABB'. Die x-Achse 24 in Figur 6 entspricht dem Gier-Winkel des Quaders 16, wobei 0 Grad einer Orientierung entsprechen, bei der die z-Achse 20 des Raumkoordinatensystems, die durch die Tiefendetektion des Lidar-Sensors definiert ist, dem Normalenvektor einer Seite des Quaders 16 entspricht. Bildlich gesprochen zeigt die Figur 6 also, dass der Quader 16 bei einem angenommenen Gier-Winkel von 100 Grad bzw. von -80 Grad gut orientiert ist, da das rückprojizierte AABB' gut mit dem ursprünglichen AABB übereinstimmt.

Der zweite Term $T_2''$ der dritten Zielfunktion $Z_3$ ist analog zum Term $T_2$ der ersten Zielfunktion $Z_1$ ein 3D-Punktepopulationsterm. Allerdings wird dabei das Volumen des Quaders 16 verwendet und nicht das Volumen eines Zylinders.

Im vorliegenden Ausführungsbeispiel ist die dritte Zielfunktion $Z_3$ also die folgende Linearkombination der Terme $T_1''$, und $T_2''$:

$$Z_3 = 2\,T_1'' + 1\,T_2''$$

Im vorliegenden Ausführungsbeispiel wird zudem nachdem die Optimierung mittels der dritten Zielfunktion $Z_3$ in Schritt S230 abgeschlossen ist, erneut mittels der ersten Zielfunktion $Z_1$, und den in den Schritten S220 und S230 erhaltenen optimierten Werte für die Größe und die Orientierung des 16, die Position des Quaders 16 optimiert. Als Startwert für die Position wird bevorzugt die schon optimierte Position verwendet. Danach erfolgen wie schon beschrieben in einem iterativen Prozess die nachfolgenden Optimierungen, bis das Abbruchkriterium erreicht ist.

Bezugszeichenliste

| 10 | Ablaufdiagramm |
| 12 | Lidar-Sensor-Daten |
| 14 | dreidimensionaler Datenpunkt |
| 16 | dreidimensionaler Hüllkörper, Quader |
| 18 | y-Achse von Figur 2, 4 und 6 |
| 20 | x-Achse von Figur 2 und 4, entspricht z-Achse des Raumkoordinatensystems |
| 22 | Abstand |
| 24 | x-Achse von Figur 6, Gier-Winkel |

| S100 | Eingabe |
| S200 | Optimierung |
| S210 | Optimierung der Position |
| S220 | Optimierung der Größe |
| S230 | Optimierung der Orientierung |
| S300 | Ausgabe |

| $Z_1$ | erste Zielfunktion |
| $Z_2$ | zweite Zielfunktion |
| $Z_3$ | dritte Zielfunktion |

| $T_1$ | erster Term der ersten Zielfunktion, 2D-3D-Konsistenzterm |
| $T_2$ | zweiter Term der ersten Zielfunktion, 3D-Punktepopulationsterm |
| $T_3$ | dritter Term der ersten Zielfunktion, Hüllkörper-Abstandsterm |
| $T_1'$ | erster Term der zweiten Zielfunktion, 2D-3D-Konsistenzterm |
| $T_2'$ | zweiter Term der zweiten Zielfunktion, Vorwissensterm |
| $T_1''$ | erster Term der dritten Zielfunktion, 2D-3D-Konsistenzterm |
| $T_2''$ | zweiter Term der dritten Zielfunktion, 3D-Punktepopulationsterm |

**Patentansprüche**

1. Computerimplementiertes Verfahren zum Ermitteln eines dreidimensionalen Hüllkörpers (16), bevorzugt eines Quaders, für ein auf ersten Daten (12) dargestelltes Objekt, wobei die ersten Daten (12) wenigstens drei Raumdimensionen umfassen, mit den Schritten

    - Empfangen von Informationsdaten eines zweidimensionalen minimal umgebenden Polygons, bevorzugt eines zweidimensionalen minimal umgebenden Rechteckes, für das auf zweiten Daten dargestellte Objekt, wobei die zweiten Daten wenigstens zwei Raumdimensionen umfassen, wobei die empfangenen Informationsdaten eine Größe und eine Position des minimal umgebenden Polygons des Objektes in den zweiten Daten definieren,
    - Empfangen einer Projektionsmatrix, wobei die Projektionsmatrix eine Abbildung eines dreidimensionalen Datenpunktes (14) der ersten Daten (12) auf einen zweidimensionalen Datenpunkt in den zweiten Daten definiert,
    - Ermitteln des dreidimensionalen Hüllkörpers (16) des Objektes mittels eines mathematischen Optimierungsverfahrens und einer Zielfunktion ($Z_1$, $Z_2$, $Z_3$), wobei die Zielfunktion weniger als 100000 Terme, bevorzugt weniger als 10000 Terme, noch weiter bevorzugt weniger als 1000 Terme ($T_1$, $T_2$, $T_3$, $T_1'$, $T_2'$, $T_1''$, $T_2''$) umfasst, umfassend

        - Initiieren von Informationsdaten des dreidimensionalen Hüllkörpers (16) des Objektes, wobei die Informationsdaten eine Größe, eine Position und eine Orientierung des Hüllkörpers (16) des Objektes in den ersten Daten (12) definieren,
        - Generieren von Informationsdaten eines weiteren zweidimensionalen minimal umgebenden Polygons durch projizieren des initiierten Hüllkörpers (16) mittels der empfangenen Projektionsmatrix, und
        - Vergleichen der generierten Informationsdaten mit den empfangenen Informationsdaten.

2. Verfahren nach Anspruch 1, wobei es sich bei den ersten Daten (12) um eine mittels eines Lidar- oder Radar- Sensors aufgezeichnete Punktwolke handelt und/oder wobei es sich bei den zweiten Daten um mittels einer Kamera aufgezeichnete Bilddaten handelt.

3. Verfahren nach einem der vorhergehenden Ansprüche, wobei das Verfahren den Schritt Empfangen der ersten Daten (12) umfasst, und wobei bei dem Ermitteln des dreidimensionalen Hüllkörpers (16) des Objektes mittels des mathematischen Optimierungsverfahrens die empfangenen Daten (12) berücksichtigt werden.

4. Verfahren nach einem der vorhergehenden Ansprüche, wobei das mathematische Optimierungsverfahren ein Optimieren dreier Zielfunktionen ($Z_1$, $Z_2$, $Z_3$) mit jeweils weniger als 100000 Terme umfasst, wobei mittels der ersten Zielfunktion ($Z_1$) ausschließlich die Position des dreidimensionalen Hüllkörpers (16) optimiert wird, wobei mittels der zweiten Zielfunktion ($Z_2$) ausschließlich die Größe des dreidimensionalen Hüllkörpers (16) optimiert wird, und wobei mittels der dritten Zielfunktion ($Z_3$) ausschließlich die Orientierung des dreidimensionalen Hüllkörpers (16) optimiert wird; und/oder

das mathematische Optimierungsverfahren ein iteratives Optimieren der drei Zielfunktion ($Z_1$, $Z_2$, $Z_3$) umfasst und mit der ersten Zielfunktion ($Z_1$) begonnen wird.

5. Verfahren nach Anspruch 4, wobei die erste Zielfunktion ($Z_1$) wenigstens einen Term ($T_1$) umfasst, und bevorzugt eine Linearkombination wenigstens dreier Terme ($T_1$, $T_2$, $T_3$) ist, wobei

   a) der erste Term ($T_1$) ein 2D-3D-Konsistenzterm ist, der durch das Vergleichen der generierten Informationsdaten mit den empfangenen Informationsdaten ermittelt wird, und/oder
   b) das Verfahren den Schritt empfangen der ersten Daten (12) umfasst und der zweite Term ($T_2$) ein 3D-Punktepopulationsterm ist, der durch ein Ermitteln einer Anzahl an dreidimensionaler Datenpunkte (14) der ersten Daten (12) innerhalb des initiierten und/oder ermittelten dreidimensionalen Hüllkörpers (16) des Objektes ermittelt wird, und/oder
   c) der dritte Term ($T_3$) ein Hüllkörper-Abstandsterm ist, der durch Ermitteln eines Abstandes (22) einer Fläche des Hüllkörpers (16) zu einer Seite, und bevorzugt einer dem Lidar- oder Radar- Sensor zugewandten Seite des Objektes ermittelt wird.

6. Verfahren nach Anspruch 5, wobei der erste Term ($T_1$) eine höhere Gewichtung und bevorzugt eine doppelte Gewichtung $\pm$ 20% als der zweite Term ($T_2$), und der zweite Term ($T_2$) eine höhere Gewichtung und bevorzugt eine wenigstens 50 mal so hohe Gewichtung als der dritte Term ($T_3$) aufweist.

7. Verfahren nach einem der Ansprüche 4 bis 6, wobei die zweite Zielfunktion ($Z_2$) wenigstens einen Term ($T_1'$) umfasst, und bevorzugt eine Linearkombination wenigstens zweier Terme ($T_1'$, $T_2'$) ist, wobei

   a) der erste Term ($T_1'$) ein 2D-3D-Konsistenzterm ist, der durch das Vergleichen der generierten Informationsdaten mit den empfangenen Informationsdaten ermittelt wird, und/oder
   b) der zweite Term ($T_2'$) ein Vorwissensterm ist, und das Verfahren bevorzugt den Schritt Empfangen eines Klassifizierungsergebnisses des Objektes umfasst.

8. Verfahren nach Anspruch 7, wobei der erste Term ($T_1'$) und der zweite Term ($T_2'$) gleich stark $\pm$ 20%

gewichtet sind.

9. Verfahren nach einem der Ansprüche 4 bis 8, wobei die dritte Zielfunktion ($Z_3$) wenigstens einen Term ($T_1''$) umfasst, und bevorzugt eine Linearkombination wenigstens zweier Terme ($T_1''$, $T_2''$) ist, wobei

   a) der erste Term ($T_1''$) ein 2D-3D-Konsistenzterm ist, der durch das Vergleichen der generierten Informationsdaten mit den empfangenen Informationsdaten ermittelt wird, und/oder
   b) das Verfahren den Schritt empfangen der ersten Daten (12) umfasst und der zweite Term ($T_2''$) ein 3D-Punktepopulationsterm ist, der durch ein Ermitteln einer Anzahl an dreidimensionaler Datenpunkte (14) der ersten Daten (12) innerhalb des initiierten und/oder ermittelten dreidimensionalen Hüllkörpers (16) des Objektes ermittelt wird.

10. Verfahren nach Anspruch 9, wobei der erste Term ($T_1''$) eine höhere Gewichtung und bevorzugt eine zweimal so hohe Gewichtung $\pm$ 20% als der zweite Term ($T_2''$) aufweist.

11. Verfahren nach einem der vorhergehenden Ansprüche, wobei zum Durchführen des mathematischen Optimierungsverfahrens ein Algorithmus verwendet wird, der zum Bestimmen der Suchrichtung nicht einen Gradienten oder finite Differenzen verwendet.

12. Verfahren nach einem der vorhergehenden Ansprüche, wobei die ersten Daten (12) und die zweiten Daten jeweils eine Zeitdimension aufweisen und

   a) bei der Optimierung berücksichtigt wird, dass sich der ermittelte dreidimensionale Hüllkörper (16) in seiner Form über die Zeit für das Objekt nicht mehr als ein vordefinierter Grenzwert ändert; und/oder
   b) bei der Optimierung berücksichtigt wird, dass

      - Sprungstellen einer Trajektorie des ermittelten dreidimensionalen Hüllkörpers (16) eine vordefinierte Größe nicht überschreiten, und/oder
      - der ermittelte dreidimensionale Hüllkörper (16) eine vordefinierte instantane Geschwindigkeit nicht über- und/oder unterschreitet, und/oder
      - der ermittelte dreidimensionale Hüllkörper (16) eine vordefinierte instantane Beschleunigung nicht über- und/oder unterschreitet.

13. Rechenumgebung zur Datenverarbeitung umfassend Mittel zur Ausführung des Verfahrens nach einem der Ansprüche 1 bis 12.

14. Computerprogrammprodukt, umfassend Befehle, die bei der Ausführung des Programms durch einen Computer diesen veranlassen, das Verfahren nach einem der Ansprüche 1 bis 12 auszuführen.

15. Computerlesbaren Datenträger, auf dem das Computerprogrammprodukt nach Anspruch 14 gespeichert ist.

Fig. 1

Fig. 2

Fig. 3

Fig. 4

a)    b)

Fig. 5

Fig. 6

Europäisches
Patentamt
European
Patent Office
Office européen
des brevets

# EUROPÄISCHER RECHERCHENBERICHT

Nummer der Anmeldung

EP 24 19 3316

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2023/006835 A1 (FIVE AI LTD [GB]) 2. Februar 2023 (2023-02-02) * Zusammenfassung * * Absätze [0003], [0008], [0030], [0048], [0051], [0076], [0077], [0079], [0087], [0090], [0101], [0102], [0105], [0115] * ----- | 1-15 | INV. G06T7/11 G06T7/194 |

RECHERCHIERTE
SACHGEBIETE (IPC)

G06T

Der vorliegende Recherchenbericht wurde für alle Patentansprüche erstellt

| Recherchenort | Abschlußdatum der Recherche | Prüfer |
|---|---|---|
| München | 28. November 2024 | Scholz, Volker |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

.......................................................................
& : Mitglied der gleichen Patentfamilie, übereinstimmendes Dokument

EPO FORM 1503 03.82 (P04C03)

**EP 4 693 179 A1**

**ANHANG ZUM EUROPÄISCHEN RECHERCHENBERICHT
ÜBER DIE EUROPÄISCHE PATENTANMELDUNG NR.**   EP 24 19 3316

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-11-2024

| Im Recherchenbericht angeführtes Patentdokument | Datum der Veröffentlichung | Mitglied(er) der Patentfamilie | Datum der Veröffentlichung |
|---|---|---|---|
| WO 2023006835 A1 | 02-02-2023 | CN 117795566 A | 29-03-2024 |
| | | EP 4374339 A1 | 29-05-2024 |
| | | US 2024338916 A1 | 10-10-2024 |
| | | WO 2023006835 A1 | 02-02-2023 |

Für nähere Einzelheiten zu diesem Anhang : siehe Amtsblatt des Europäischen Patentamts, Nr.12/82